# EUROPEAN PATENT SPECIFICATION

(11) **EP 3 738 192 B1**
(45) Date of publication and mention of the grant of the patent: **16.11.2022**
(21) Application number: 18706584.2
(22) Date of filing: 09.01.2018
(51) Int. Cl.: H02K 1/27, H02K 21/22, H02K 15/00, H02K 15/16, B60K 7/00, H02K 7/00, B60L 3/00, H02K 7/18, B60L 7/24, H02K 1/2786

(54) **IN-WHEEL ELECTRIC MOTOR MAINTENANCE INTEGRATION**
INTEGRATION DER WARTUNG EINES RADINTERNEN ELEKTROMOTORS
INTÉGRATION DE MAINTENANCE DE MOTEUR-ROUE ÉLECTRIQUE

(43) Date of publication of application: 18.11.2020
(73) Proprietor: Elaphe Propulsion Technologies Ltd., 1000 Ljubljana (SI)
(72) Inventor: CONNES, Raphael, 91400 Orsay (FR); SUSTERSIC , Gasper, 1210 Ljubljana (SI); GOTOVAC, Gorazd, 1000 Ljubljana (SI); OMEROVIC , Senad, 1216 Smlednik (SI); VLAJ, Ales, 9201 Puconci (SI)
(74) Representative: Grünecker Patent- und Rechtsanwälte PartG mbB
(86) International application number: PCT/SI2018/000002
(87) International publication number: WO 2019/139545

(56) References cited:
- CN-A- 105 437 951
- DE-A1- 19 721 528
- FR-A1- 2 811 488

## Description

The present invention relates to the field of electrical machines, focusing on mechanical design of an in-wheel motor that enables fast and convenient brake and bearing servicing, in-wheel motor tuning, servicing, replacement, assembly and testing in production. In particular, the present invention relates to a rotor-stator combination according to the preamble of independent claim 1, to a system for assembling and/or servicing an in-wheel electric motor with such a rotor-stator combination according to claim 6, an in-wheel electric motor assembly of a vehicle with such a rotor-stator combination according to claim 11, a method for manufacturing a rotor-stator combination according to claim 12, and to a method of performing maintenance work on serviceable parts of an in-wheel electric motor assembly of a vehicle according to claim 15.

Currently a couple of prevailing layouts are used for in-wheel motors where the majority of them could be divided into two groups. The first group being in-wheel motors that contain serviceable components which can be removed with intact rotor and stator bearing system, and the second group where the bearing system is affected by said removal. The invention of this patent falls within the latter group, where typical examples for serviceable components are the brake system and the bearing system. The description focuses mainly on braking system maintenance, while not being limited to it, it equally refers to the other serviceable components as well.

The access to the brake system with the purpose of tuning and quick servicing is very limited, especially when the whole brake system needs to be removed, serviced and mounted back, which is usually a complicated process and requires expensive tools. While performing any servicing on the brake system it is crucial to maintain a proper and uniform air gap between stator and rotor to achieve the appropriate accuracy of the assembly process. In the existing solutions with the integrated brake the in-wheel motor cannot be removed from the vehicle without also removing the brake system from the vehicle, which is also true when motor seals or bearings need to be serviced. The brake system has to be delivered and sold together with the in-wheel motor, otherwise complicated mounting procedures have to be performed by the customer, usually also including usage of complicated and expensive tools. Furthermore the braking system needs to be present in assembly when implementing procedures of production testing of the in-wheel motor.

US patent application US 20150137669 A1 which discloses a rotor-stator combination according to the preamble of independent claim 1 partially addresses the above described shortcomings as well as the need to include the brake system in maintenance and sales procedures while also reducing the complexity of the tools needed by allowing to remove one of the rotor structural parts using relatively simple "rotor/stator locking" flanges on the motor plane facing the inside of the vehicle. This is appropriate for a drum brake system, since there is sufficient access to the braking pads and other components by simply removing the drum, but for any substantial servicing of the disc brake (pad replacement, disc replacement, caliper servicing etc.) apart from removing the air from the hydraulic fluid circuit, the whole brake needs to be removed from the vehicle, in most cases also disconnected from the vehicle due to the inflexibility of hydraulics attachments. The solution described in US 20150137669 A1 is therefore not optimal for a motor with a disc brake. Furthermore, the proposed solution does not address the difficulty of removing the brake, since sensitive components such as seals and threadlocked screws need to be removed and reinstalled whenever such a removal and reinstallation of the brake is done. The use of the proposed "stator/rotor locking" flanges can sometimes be obstructed by the vehicle components and is therefore subject to vehicle- dependent customization which can be economically less favorable. International patent application WO 2009086884 A1 describes a solution for a quick service of the brake system made possible by removing the wheel rim from the wheel hub to gain the needed working space for servicing while the electric motor remains fastened to the vehicle knuckle. The assembly is overdetermined due to bearings being arranged both between axle and wheel hub and between rotor and stator of the electric motor such that the rotor cannot be fastened to the wheel hub or the wheel rim. The rotation of the rotor is transmitted to the wheel rim via form-locking elements on rotor and rim. The solution described in WO 2009086884 A1 requires radial and axial play between the form-locking elements of rotor and wheel rim. Furthermore, the proposed solution does not solve maintenance integration of the bearing system and the seals. The solution described in international patent application WO 1995000352 A1 includes a hollow bearing system, but it does not solve the problem of the brake integration and poorly solves the sealing problem, as it does not provide suitable solutions for the small diameter seals. KR100875004 focuses on in-wheel motor design for solving mounting problems in direction of minimizing the cumulative tolerance with various adaptations of assembly part joints relating to those of the prior art and thus not solving maintenance integration at all.

A rotor-stator combination according to the present invention is defined by independent claim 1.

Further relevant prior art is described in DE 197 21 528 A1, FR 2 811 488 A1 and CN 105 437 951 A.

The in-wheel electric motor design covered by this invention allows an easy to use locking tool for rotor and stator, with which it successfully solves the key problems of the mechanical design, as it allows shipping of the electric motor without mounted bearing system or the brake system, it also allows performance of the brake system maintenance tasks without disassembling a complete in-wheel electric motor or dismantling it from the vehicle. It protects all the parts from the mechanical damage, which could occur as the consequence of inappropriate fitting of the rotor onto the stator, and allows easy assembly of the in-wheel motor. In particular, the solution according to the present invention offers the advantage that the rotor-stator combination can be mounted to and dismounted from the vehicle knuckle as a unit. Contrary to the solution described in US 20150137669 A1, it is not necessary to partly disassemble stator and/or rotor to get access to the serviceable parts received in the interior of the rotor-stator combination.

The stator can be mounted either directly to the vehicle knuckle or via a stator plate which is fixed to the vehicle knuckle. Preferably, both the rotor fixation holes and the stator fixation holes are evenly spaced over the circumference of the rotor-stator combination. The locking tool is preferably a stiff structure. According to another preferred embodiment of the invention, the rotor is an external rotor and comprises an external rotor portion enclosing the stator and a flange extending from the external rotor portion in a radial direction towards the motor axis, wherein the rotor fixation holes are through holes formed in the flange.

Further preferred embodiments of the rotor-stator combination are subject to the dependent claims.

According to a preferred embodiment of the invention, each of the rotor fixation holes is arranged at the same radial distance from the motor axis as the corresponding stator fixation hole such that the axes of said rotor fixation hole and said corresponding stator fixation hole coincide. Preferably, all rotor fixation holes and all stator fixation holes are arranged at the same radial distance from the motor axis. Further preferably, the axes of the rotor and stator fixation holes are parallel to the motor axis.

According to another preferred embodiment of the invention, an opening of each of the rotor fixation holes is surrounded by a first flat surface of the rotor that is perpendicular to the axis of the respective rotor fixation hole, wherein an opening of each of the stator fixation holes is surrounded by a second flat surface of the stator that is perpendicular to the axis of the respective stator fixation hole.

According to another preferred embodiment of the invention, the rotor fixation holes are located on an axial side surface of the rotor facing the rim, wherein the stator holes are located close to the axial side surface of the rotor facing the rim without obstructing the bearing system and the brake.

According to another embodiment of the invention, each of the rotor fixation holes comprises a threaded portion into which the corresponding locking tool can be screwed, wherein each of the stator fixation holes also comprises a threaded portion into which the corresponding locking tool can be screwed.

According to an alternative embodiment of the invention, only the stator fixation holes comprise a threaded portion into which the corresponding locking tool can be screwed. Preferably, each of the rotor fixation holes comprises an axial portion of reduced inner diameter.

According to another embodiment of the invention, the rotor-stator combination further comprises a plurality of sealing plugs insertable into the plurality of rotor fixation holes in order to prevent dirt from entering through the rotor fixation holes into the interior of the electric motor during normal machine operation.

The present invention also provides a system for assembling and/or servicing an in-wheel electric motor, with a rotor-stator combination according to the invention and with a plurality of locking tools, wherein the rotor is locked to the stator for assembling and/or servicing purposes in that each of the plurality of locking elements is inserted into one of the plurality of rotor fixation holes and into a corresponding one of the plurality of stator fixation holes.

According to an embodiment of the system for assembling and/or servicing an in-wheel electric motor, each locking tool comprises a screw with a thread of size and type matching the size and type of the above mentioned threaded portion of the stator fixation holes, and an externally threaded tube, wherein the size and type of an external thread of the tube matches the size and type of the above mentioned threaded portion of the rotor fixation holes, wherein the tube, on one end thereof, comprises an axial portion of reduced inner diameter for limiting axial movement of the screw, and wherein the tube, on another end thereof, comprises a specific shape for mounting the tube onto the rotor fixation hole.

According to an alternative embodiment of the system for assembling and/or servicing an in-wheel electric motor, each locking tool comprises a screw with a thread of size and type matching the size and type of the above mentioned threaded portion of the stator fixation holes, wherein a head of the screw is smaller in diameter than a diameter of an axial portion of the rotor fixation holes with non-reduced inner diameter.

According to another alternative embodiment of the system for assembling and/or servicing an in-wheel electric motor, the diameter size of the rotor holes follows standardized interference fit recommendations so as to enable tight fit with the locking tool without the need for sealing plugs during the electrical machine operation, wherein the diameter size of the stator holes follows standardized interference fit recommendations so as to enable loose fit with the locking tool. In this embodiment, no threaded portions of the rotor and stator fixation holes are necessary. Preferably, the locking tool comprises a tube and an inner shaft, wherein the tube has an outer diameter of a size following standardized interference fit recommendations enabling tight fit with the rotor fixation holes, wherein said tube comprises an inner diameter of a size following standardized interference fit recommendations enabling loose fit with the inner shaft, and wherein said inner shaft has a diameter of a size following standardized interference fit recommendations enabling loose fit with the stator holes.

The present invention also provides an in-wheel electric motor assembly of a vehicle, comprising a bearing system mounted to a knuckle of the vehicle for rotatably coupling a wheel rim to the knuckle of the vehicle, a brake, and a rotor-stator combination according to the invention as described above.

According to a preferred embodiment of the in-wheel electric motor assembly, the brake comprises a brake disk and a caliper, wherein the in-wheel electric motor assembly further comprises a seal or multiple seals or other serviceable components, and wherein the bearing system, the brake, the seal of multiple seals and the other serviceable components are not removable while the stator is attached via the stator mounting points to the vehicle. Preferably, the bearing system is interchangeable with another bearing system design using a custom adapter, a change of the stator plate, or a different design of respective vehicle attachment points, wherein the brake disc and the caliper are interchangeable with another brake disc and caliper design using a custom adapter, a change of the stator plate, or a different design of respective vehicle attachment points.

The present invention also provides a method of manufacturing a rotor-stator combination, particularly according to one of the embodiments described above, the method comprising the steps of mounting a rotor and a stator on a centering arrangement, locking relative position of rotor and stator with at least one locking tool, and detaching the locked rotor-stator combination from the centering arrangement.

According to a preferred embodiment, the centering arrangement provides radial and axial constraints for the relative position of rotor and stator and allows relative rotation of rotor and stator.

According to another preferred embodiment, the locking step comprises mounting a plurality locking tools to a plurality of rotor fixation holes and a plurality of stator fixation holes that are evenly spaced around the circumference of the rotor-stator combination.

According to another preferred embodiment, an intermediate step of rotor and stator assembly dynamic testing is performed before the locking step.

According to another preferred embodiment, the centering arrangement is reused for the manufacturing of another rotor-stator combination after the locked rotor-stator combination has been detached from the centering arrangement.

According to another preferred embodiment, the method further comprises shipping the locked rotor-stator combination without installing a bearing system or a brake system to the rotor-stator combination.

The present invention also provides a method of performing maintenance work on serviceable parts of an in-wheel electric motor assembly of a vehicle, particularly according to one of the embodiments described above, the method comprising the steps of removing a vehicle wheel of the in-wheel electric motor assembly, locking relative position of a rotor and a stator of a rotor-stator combination of the in-wheel electric motor assembly with at least one locking tool; and unmounting the rotor-stator combination from mounting points of the vehicle and moving the rotor-stator combination aside without disconnecting it from the vehicle, thereby enabling maintenance of the serviceable components such as, for example, a bearing system or a brake.

According to a preferred embodiment, removing the vehicle wheel comprises unscrewing rim bolts and removing a rim of the vehicle wheel, wherein the locking step comprises mounting a plurality locking tools to a plurality of rotor fixation holes and a plurality of stator fixation holes that are evenly spaced around the circumference of the rotor-stator combination.

According to another preferred embodiment, sealing plugs are removed from the rotor fixation holes before mounting the plurality of locking tools to the plurality of rotor fixation holes and the plurality of stator fixation holes.

According to another preferred embodiment, the unmounting step comprises removing stator plate bolts and stud bolts.

Exemplary embodiments of the present invention are illustrated by way of example in the accompanying drawings in which:
- Figure 1: is a partial axonometric exploded representation of an in-wheel electric motor assembly according to the invention seen from the rim side;
- Figure 2: is a partial axonometric exploded representation of the in-wheel electric motor assembly shown in Fig. 1 seen from the vehicle side;
- Figure 3: is a sectional representation of the rotor-stator combination of the in-wheel electric motor assembly from Figs. 1 and 2 with a first embodiment of a locking tool for locking the rotor to the stator;
- Figure 4: is a sectional representation of the rotor-stator combination of the in-wheel electric motor assembly from Figs. 1 and 2 with a second embodiment of the locking tool;

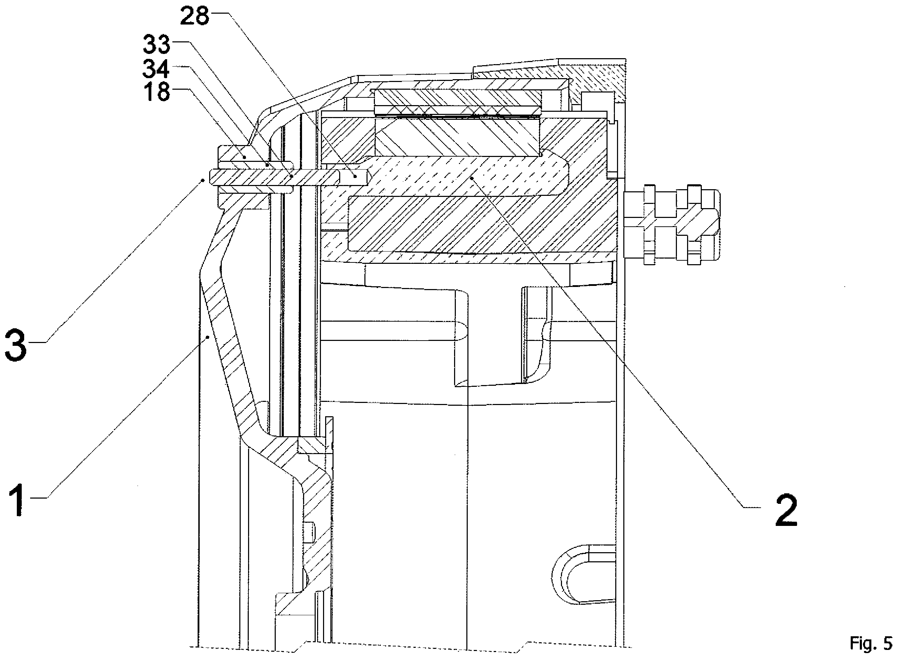

- Figure 5: is a sectional representation of the rotor-stator combination of the in-wheel electric motor assembly from Figs. 1 and 2 with a third embodiment of the locking tool;
- Figure 6: is a sectional exploded representation of the first embodiment of the locking tool;
- Figure 7: is a sectional exploded representation of the third embodiment of the locking tool;
- Figure 8: is a visualization of one of the steps of a method of manufacturing the rotor-stator combination;
- Figure 9: is a visualization of another step of the method of manufacturing the rotor-stator combination;
- Figure 10: is a visualization of another step of the method of manufacturing the rotor-stator combination;
- Figure 11: is a visualization of another step of the method of manufacturing the rotor-stator combination.
Identical or corresponding elements have the same reference signs throughout the description unless indicated otherwise.

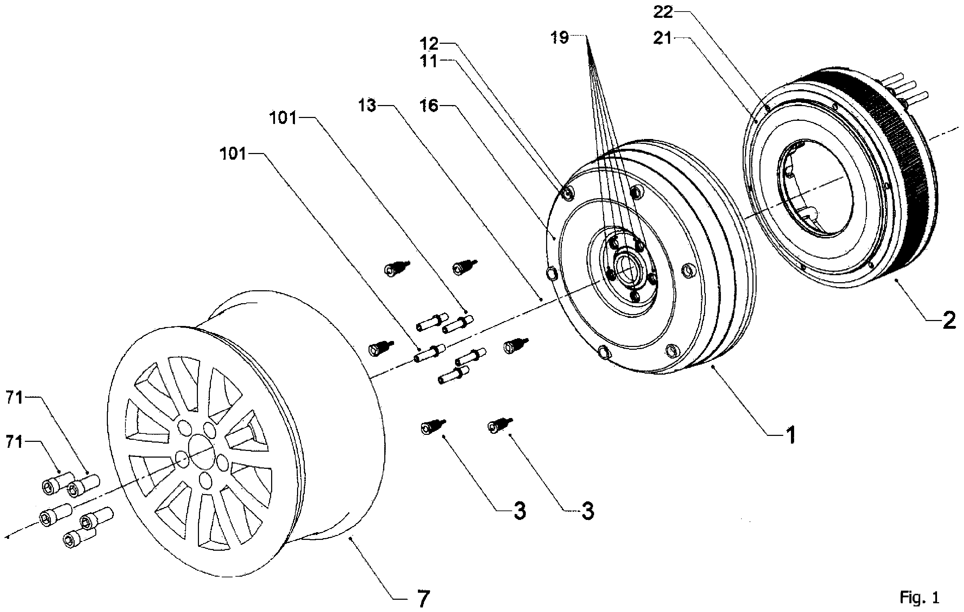

The presented innovation relates to the usage of an easy to use locking tool (3 - Figure 1) for locking electrical machine position of stator (2 - Figure 1) and rotor (1 - Figure 1), by means of matching fixing points mounted from the external side of the vehicle, where there are usually no obstructive elements.

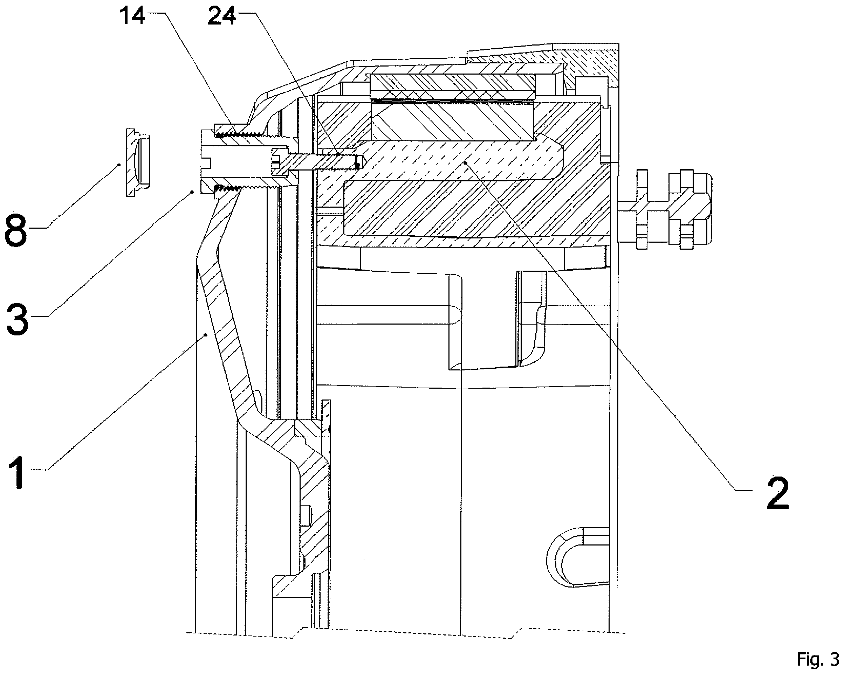

The rotor (1) comprises special features or in other words fixing points for attachment of a multiple locking tools (3), where these special features comprise flat surfaces (11 - Figure 1). Each of these flat surfaces comprises a perpendicular rotor fixation hole (12 - Figure 1). These special features are located on the axial side of the rotor facing a rim (7 - Figure 1) and can be covered by sealing plugs (8 - Figure 3) during the electrical machine operation, depending on the chosen locking tool variant. If the locking tool variant includes sealing plugs then those have to be removed before maintenance process can start.

The stator (2) in similar way comprises special features, or in other words fixing points for attachment of multiple locking tools (3). These special features are located on a flat surface (21-Figure 1) parallel to the flat surfaces of the rotor (11) when rotated by an appropriate angle, where said flat surface comprises perpendicular stator fixation holes (22 - Figure 1). These stator fixation holes on the flat surface are located close to the axial side surface (16 - Figure 1) of the rotor (1) facing the rim (7) not being obstructed by any elements. In this way the stator fixation holes are arranged at the same radial distance from the motor axis as the rotor fixation holes and can be aligned in the circumferential direction with the rotor fixation holes by means of rotation of the rotor on its axis (13 - Figure 1).

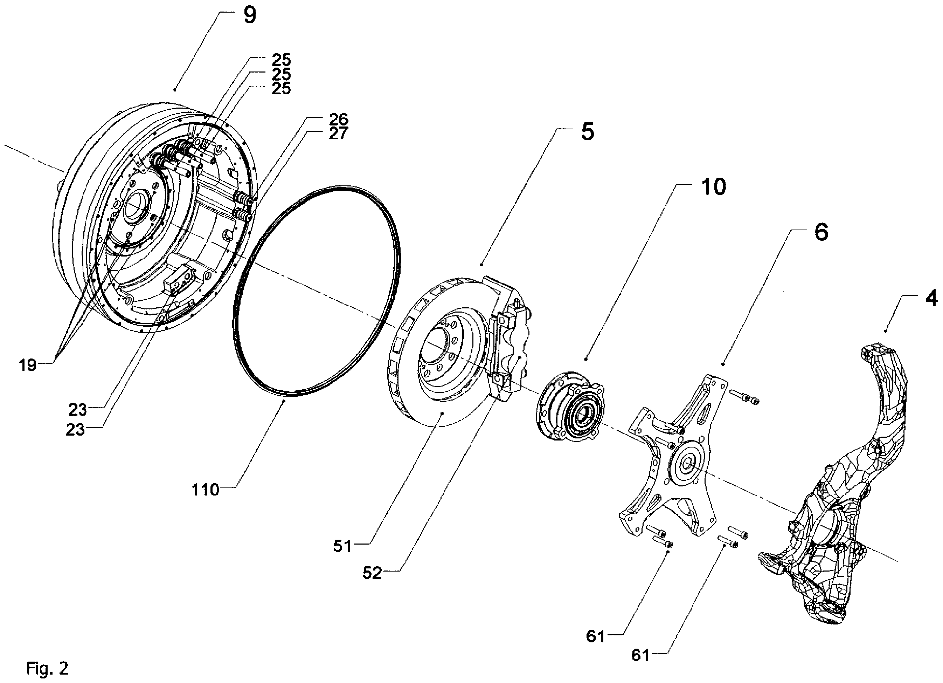

The stator (2) also contains mounting points (23 - Figure 2) for attachment to the predefined attachment points on the vehicle knuckle (4 - Figure 2) or through a stator plate (6 - Figure 2), where the stator plate is used for adapting to various vehicle attachment point layouts. These mounting points are on a diameter that assures unobstructed path for serviceable components, or in other words, is dimensioned in a way that the integrated serviceable component can be inserted and taken out of the stator.

When using the first embodiment of the locking tool (3), the rotor fixation holes (12) on the flat surfaces (11) each comprise a thread (14 - Figure 3) and are covered by sealing plugs (8) during the electrical machine operation, wherein also the stator fixation holes (22) on the flat surface (21) each comprise a thread (24 - Figure 3).

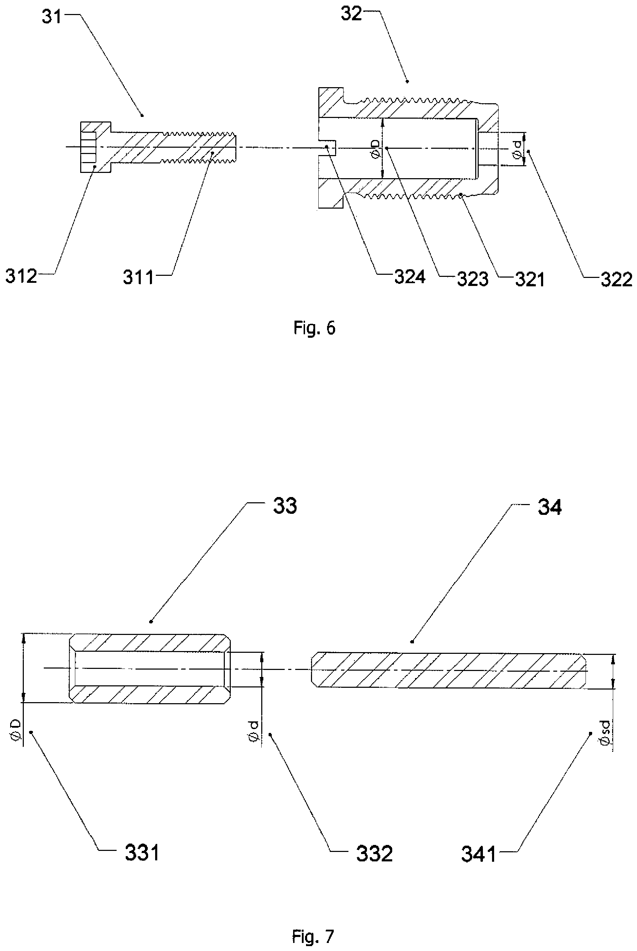

The first embodiment of the locking tool (3) comprises two parts, the first part being a screw (31 - Figure 6) with a thread (311) of a size and type matching the size and type of the thread (24) in the stator fixation holes (22), and the second part being an externally threaded tube (32 - Figure 6), wherein external thread (321) size and type of the tube matches the thread (14) size and type of the rotor fixation holes (12). The tube has an axially partial reduction of inner diameter on one end (322) for limiting axial movement of the screw, basically representing a seat for the screw head (312). On the other end of the tube there is a specific shape (324) used for mounting the tube onto the rotor fixation holes. The special shape refers to the matching geometry of a preferred tool used for mounting the locking tool.

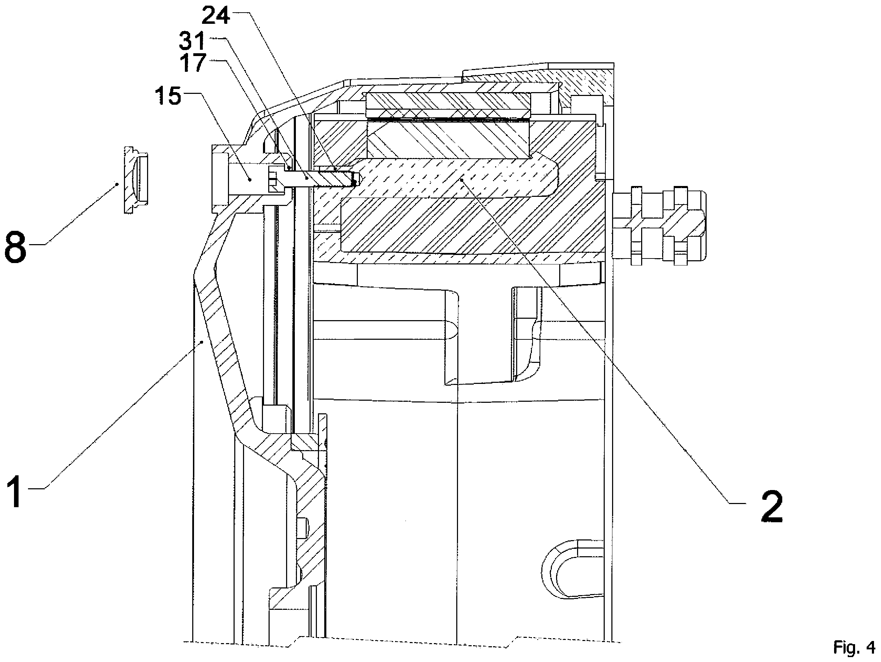

When using the second embodiment of the locking tool (3), the rotor fixation holes (12) on the flat surfaces (11) each comprise an axially partial reduction of inner diameter (15 - Figure 4) for limiting axial movement of the screw (31), basically representing a seat for the screw head (312). This means that in this embodiment of the locking tool, the functional shape of an externally threaded tube (32) from the first locking tool embodiment was incorporated into the rotor (1) design. Sealing plugs (8) need to be put into the rotor fixation holes on the flat surfaces during the electrical machine operation in this embodiment, wherein each of the stator fixation holes (22) on the flat surface (21) comprises a thread (24 - Figure 3).

The second embodiment of the locking tool (3) comprises a screw (31 - Figure 4) with a diameter of its head (312) smaller than the diameter of a non-reduced inner diameter (17 - Figure 4) of the rotor fixation holes (12) on the flat surfaces (11), thus being the only maintenance part comprising this embodiment of locking tool.

When using the third embodiment of the locking tool (3), the diameter size of the rotor holes (12;18) on the flat surfaces (11) follows standardized interference fit recommendations, also known as shaft and holes fits, so as to enable tight fit with the locking tool. There is no need for sealing plugs (8) during the electrical machine operation, since this embodiment of locking tool does not need to be removed from the rotor (1), nor does this embodiment of locking tool require any tool for mounting. The diameter size of the stator fixation holes (22 - Figure 1; 28 - Figure 5) on the flat surface (21) also follows standardized interference fit recommendations, so as to enable loose fit with the locking tool.

The third embodiment of the locking tool (3) comprises two parts, the first one being a tube (33 - Figure 7) with an outer diameter (331) of a size following standardized interference fit recommendations, enabling tight fit with the rotor fixation holes (12;18) on the flat surfaces (11). The tube comprises also an inner diameter (332) of a size following standardized interference fit recommendations, enabling loose fit with an inner shaft (34 - Figure 7). The inner shaft is the second part of the locking tool according to the third embodiment and has a diameter (341) of a size following standardized interference fit recommendations, enabling loose fit with the stator fixation holes (22;28) on the flat surface (21).

In the main embodiment of this invention the mentioned electrical machine is an in-wheel motor (9 - Figure 2), comprising a bearing system inside the motor (10 - Figure 2), a brake disk (51 - Figure 2), a caliper (52 - Figure 2), and a seal or multiple seals (110 - Figure 2), or other serviceable components which are not removable while the stator is attached to the vehicle without the use of the locking tool (3). The bearing system, the brake disk and the caliper are all interchangeable with alternative design of the mentioned parts, either by using a custom adapter, by applying changes to the stator plate (6), or by changing the design of the vehicle attachment points.

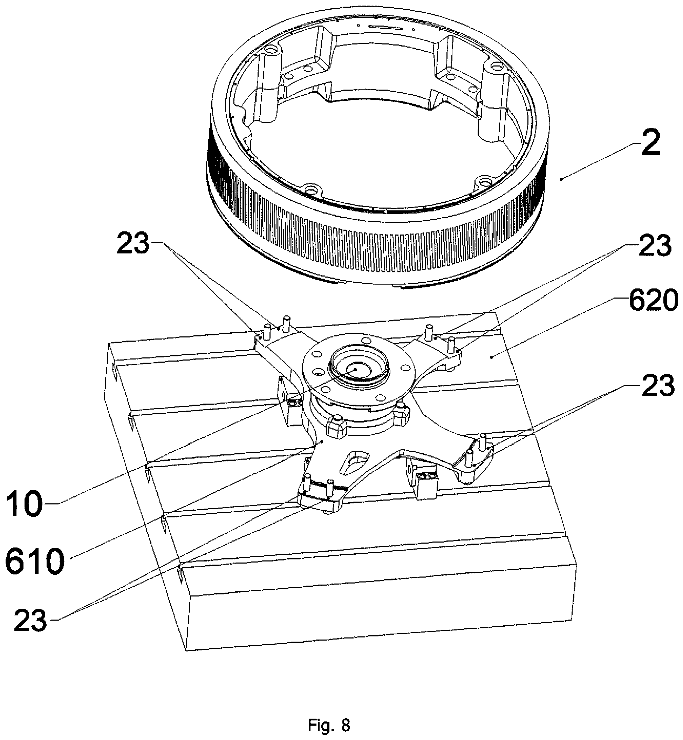

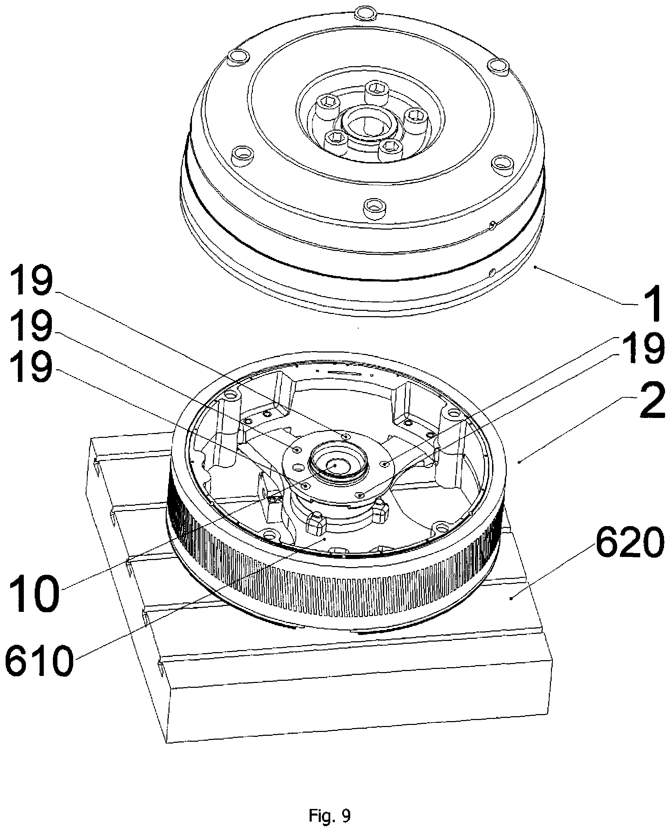

A novel manufacturing method for the rotor-stator combination described above is performed using the following major steps; attaching the stator (2) to a special centering arrangement (610 - Figure 8) using the stator mounting points (23); attaching the rotor (1) to the centering arrangement using the rim mounting points (19 - Figure 9) inserting the locking tools (3) and removing the locked rotor-stator combination from the centering arrangement. The centering arrangement main function is to provide radial and axial constraints for the relative position of the rotor and stator before the locking tool is inserted, but it is desirable that the centering arrangement includes additional functions as described below.

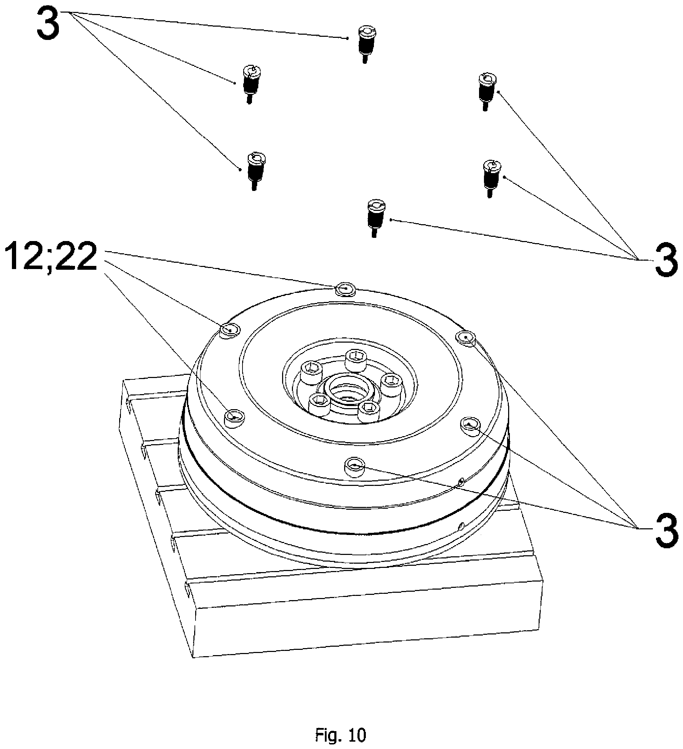

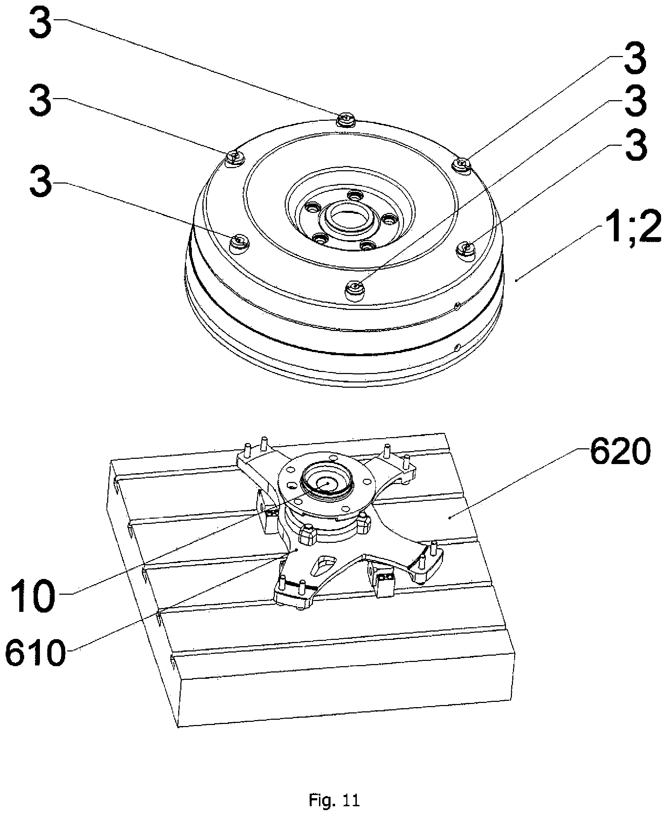

In a preferred embodiment of the novel manufacturing method, the centering arrangement (610) is integrated with the production line pallet (620 - Figure 8) and allows relative rotation of the stator (2) and the rotor (1) by containing a bearing system (10). During the manufacturing the stator is attached to the centering arrangement through stator mounting points (23) with a quick mounting tool and the rotor is attached to the centering arrangement rotatable part with bolts through rim mounting points (19 - Figure 9). The end of line testing can then be performed on the assembly, including running the rotor and stator assembly, testing maximum torque and thermal properties. After the test is completed, the locking tools (3 - Figure 10) can be inserted and the locked assembly can be removed from the centering arrangement altogether and prepared for shipping. The centering arrangement (610 - Figure 11) returns with the pallet to the start of the assembly line.

Alternatively other embodiments of the manufacturing method are possible.

A method for performing maintenance work on serviceable parts of an in-wheel electric motor assembly of a vehicle comprises the following steps; unscrewing the main rim bolts (71 - Figure 1), removing the rim (7 - Figure 1), removing the sealing plugs (8) in the embodiments where they are required, mounting locking tools to rotor fixation holes (12) and stator fixation holes (22), thus locking relative position of stator and rotor, further removing stud bolts (101 - Figure 1) and the stator plate bolts (61 - Figure 2) if the motor is not mounted directly to the vehicle knuckle (4). The in-wheel motor rotor-stator combination (9) can then be moved aside without the need to disconnect it, and the brake system (5) can be serviced with the same access as in a conventional vehicle. The in-wheel motor rotor-stator combination can be easily removed by the mentioned procedure and the disconnection of the phase cables (25 - Figure 1), the cooling inlet (26 - Figure 1), and outlet (27 - Figure 1) can be achieved. Furthermore, the procedure can include in-wheel motor seal (110) service, where the brake system is not affected.

Using the locking tool has a big advantage, since the company producing the electric motors does not have to deal with logistics and storage of the brake system and bearing system with guarantees for their correct installation and tuning.

## Claims

1. Rotor-stator combination (9) for an in-wheel electric motor assembly of a vehicle, the in- wheel electric motor assembly comprising: a bearing system (10) mounted to a knuckle of the vehicle for rotatably coupling a wheel rim (7) to the knuckle (4) of the vehicle, a brake (5), and the rotor-stator combination comprising a rotor (1 ) and a stator (2), wherein rotor and stator are arranged concentrically with respect to each other such that rotor and stator share a common motor axis (13), and wherein the rotor-stator combination has a first axial end facing the vehicle knuckle in a fully assembled state of the in-wheel electric motor assembly and a second axial end facing away from the vehicle knuckle in a fully assembled state of the in-wheel electric motor assembly, wherein the stator (2) comprises stator mounting points (23) for mounting the rotor-stator combination to the vehicle knuckle (4), wherein the rotor-stator combination has a hollow interior adapted to receive the bearing system (10) and the brake (5) in a fully assembled state of the in-wheel electric motor assembly, and wherein the rotor (1) comprises a plurality of rotor fixation holes (12) and the stator (2) comprises a plurality of stator fixation holes (22), wherein the rotor is lockable to the stator such that the concentric arrangement of rotor and stator is maintained without a bearing being arranged between rotor and stator, wherein locking the rotor to the stator is achievable by inserting a plurality of locking tools (3) into the plurality of rotor fixation holes and into the plurality of stator fixation holes, wherein each of the plurality of locking elements is inserted into one of the plurality of rotor fixation holes and into a corresponding one of the plurality of stator fixation holes, **characterized in that** an opening of the rotor-stator combination at the first axial end of the rotor-stator combination facing the knuckle and leading into the hollow interior of the rotor-stator combination is designed such that the rotor-stator combination can be mounted to and dismounted from the vehicle knuckle as a unit without the need to remove the bearing system and/or the brake from the vehicle knuckle, wherein the stator mounting points are arranged at such a distance from the motor axis that the stator mounting points do not interfere with the bearing system and brake when the rotor-stator combination is mounted to or dismounted from the vehicle knuckle.

2. Rotor-stator combination according to one of claims 1, **characterized in that** the rotor fixation holes (12) are located on an axial side surface (16) of the rotor (1) facing the rim (7), wherein the stator holes (22) are located close to the axial side surface of the rotor facing the rim without obstructing the bearing system and the brake.

3. Rotor-stator combination according to one of claims 1 or 2, **characterized in that** each of the rotor fixation holes (12) comprises a threaded portion (14) into which the corresponding locking tool (3) can be screwed, wherein each of the stator fixation holes (22) also comprises a threaded portion (24) into which the corresponding locking tool (3) can be screwed.

4. Rotor-stator combination according to one of claims 1 to 3, **characterized in that** each of the stator fixation holes (22) comprises a threaded portion (24) into which the corresponding locking tool (3) can be screwed, wherein optionallyeach of the rotor fixation holes (12) comprises an axial portion of reduced inner diameter (15).

5. Rotor-stator combination according to any one of claims 1 to 4, **characterized in that** the rotor-stator combination further comprises a plurality of sealing plugs (8) insertable into the plurality of rotor fixation holes (12).

6. System for assembling and/or servicing an in-wheel electric motor, with a rotor-stator combination according to one of claims 1 to 5 and with a plurality of locking tools (3), wherein the rotor (1) is locked to the stator (2) for assembling and/or servicing purposes in that each of the plurality of locking elements is inserted into one of the plurality of rotor fixation holes (12) and into a corresponding one of the plurality of stator fixation holes (22).

7. System according to claim 6 with a rotor-stator combination according to claim 3, **characterized in that** each locking tool (3) comprises a screw (31 ) with a thread (31 1 ) of size and type matching the size and type of the threaded portion (24) of the stator fixation holes (22), and an externally threaded tube (32), wherein the size and type of an external thread (321 ) of the tube matches the size and type of the threaded portion of the rotor fixation holes (12), wherein the tube, on one end thereof, comprises an axial portion of reduced inner diameter (322) for limiting axial movement of the screw, and wherein the tube, on another end thereof, comprises a specific shape (324) for mounting the tube onto the rotor fixation hole.

8. System according to claim 6 with a rotor-stator combination according to claim 4, **characterized in that** each locking tool (3) comprises a screw (31 ) with a thread (31 1 ) of size and type matching the size and type of the threaded portion (24) of the stator fixation holes (22), wherein a head (312) of the screw is smaller in diameter than a diameter of an axial portion of the rotor fixation holes (12) with non-reduced inner diameter (17).

9. System according to claim 6, **characterized in that** the diameter size of the rotor holes (12; 18) follows standardized interference fit recommendations so as to enable tight fit with the locking tool (3), wherein the diameter size of the stator holes (22; 28) follows standardized interference fit recommendations so as to enable loose fit with the locking tool.

10. System according to claim 9, **characterized in that** the locking tool (3) comprises a tube (33) and an inner shaft (34), wherein the tube (33) has an outer diameter (331 ) of a size following standardized interference fit recommendations enabling tight fit with the rotor fixation holes (12; 18), wherein said tube comprises an inner diameter (332) of a size following standardized interference fit recommendations enabling loose fit with the inner shaft (34), and wherein said inner shaft has a diameter (341 ) of a size following standardized interference fit recommendations enabling loose fit with the stator holes (22; 28).

11. In-wheel electric motor assembly of a vehicle, comprising a bearing system (10) mounted to a knuckle (4) of the vehicle for rotatably coupling a wheel rim (7) to the knuckle (4) of the vehicle, a brake (5), and a rotor-stator combination according to one of claims 1 to 5, wherein the brake (5) comprises a brake disk (51 ) and a caliper (52), wherein the in-wheel electric motor assembly further comprises a seal or multiple seals (1 10) or other serviceable components, and wherein the bearing system, the brake, the seal of multiple seals and the other serviceable components are not removable while the stator (2) is attached via the stator mounting points (23) to the vehicle, wherein optionally bearing system (10) is interchangeable with another bearing system design using a custom adapter, a change of the stator plate (6), or a different design of respective vehicle attachment points, wherein the brake disc (51 ) and the caliper (52) are interchangeable with another brake disc and caliper design using a custom adapter, a change of the stator plate, or a different design of respective vehicle attachment points.

12. A method of manufacturing a rotor-stator combination, according to one of claims 1 to 5, the method comprising the steps of: mounting a rotor (1 ) and a stator (2) on a centering arrangement (610), locking relative position of rotor (1 ) and stator (2) with at least one locking tool (3); and detaching the locked rotor-stator combination from the centering arrangement.

13. The method according to claim 12, wherein the centering arrangement (610) provides radial and axial constraints for the relative position of rotor (1 ) and stator (2) and allows relative rotation of rotor and stator, and/or wherein an intermediate step of rotor (1) and stator (2) assembly dynamic testing is performed before the locking step, and/or wherein the method further comprises shipping the locked rotor-stator combination without installing a bearing system (10) or a brake system (5) to the rotor-stator combination.

14. The method according to one of claims 12 to 13, wherein the centering arrangement (610) is reused for the manufacturing of another rotor-stator combination after the locked rotor-stator combination has been detached from the centering arrangement.

15. A method of performing maintenance work on serviceable parts of an in-wheel
electric motor assembly of a vehicle according to claim 11, the method comprising the steps of: removing a vehicle wheel of the in-wheel electric motor assembly; locking relative position of a rotor (1) and a stator (2) of a rotor-stator combination of the in-wheel electric motor assembly with at least one locking tool (3); and unmounting the rotor-stator combination from mounting points of the vehicle and moving the rotor-stator combination aside without disconnecting it from the vehicle, thereby enabling maintenance of the serviceable components, wherein removing the vehicle wheel optionally comprises unscrewing rim bolts (71) and removing a rim (7) of the vehicle wheel, wherein the locking step optionally comprises mounting a plurality locking tools (3) to a plurality of rotor fixation holes and a plurality of stator fixation holes that are evenly spaced around the circumference of the rotor- stator combination.

## Patentansprüche

1. Rotor-Stator-Kombination (9) für eine radinterne Elektromotoranordnung eines Fahrzeugs,
wobei die radinterne Elektromotoranordnung umfasst:
ein Lagersystem (10), das an einem Achsschenkel des Fahrzeugs angebracht ist, um eine Radfelge (7) drehbar mit dem Achsschenkel (4) des Fahrzeugs zu koppeln,
eine Bremse (5), und
die Rotor-Stator-Kombination, die einen Rotor (1) und einen Stator (2) umfasst,
wobei Rotor und Stator konzentrisch zueinander angeordnet sind, so dass Rotor und Stator eine gemeinsame Motorachse (13) teilen, und
wobei die Rotor-Stator-Kombination ein erstes axiales Ende aufweist, das in einem vollständig montierten Zustand der radintegrierten Elektromotoranordnung dem Achsschenkel zugewandt ist, und ein zweites axiales Ende, das in einem vollständig montierten Zustand der radinternen Elektromotoranordnung von dem Achsschenkel weg weist,
wobei der Stator (2) Statorbefestigungspunkte (23) zum Befestigen der Rotor-Stator-Kombination an dem Achsschenkel (4) aufweist,
wobei die Rotor-Stator-Kombination einen hohlen Innenraum aufweist, der angepasst ist, um das Lagersystem (10) und die Bremse (5) in einem vollständig montierten Zustand der radinternen Elektromotoranordnung aufzunehmen, und
wobei der Rotor (1) eine Mehrzahl von Rotorbefestigungslöchern (12) aufweist und der Stator (2) eine Mehrzahl von Statorbefestigungslöchern (22) aufweist,
wobei der Rotor mit dem Stator verriegelbar ist, so dass die konzentrische Anordnung von Rotor und Stator beibehalten wird, ohne dass ein Lager zwischen Rotor und Stator angeordnet ist,
wobei das Verriegeln des Rotors mit dem Stator durch Einführen einer Vielzahl von Verriegelungswerkzeugen (3) in die Vielzahl von Rotorbefestigungslöchern und in die Vielzahl von Statorbefestigungslöchern erreichbar ist,
wobei jedes der Vielzahl von Verriegelungselementen in eines der Vielzahl von Rotorbefestigungslöchern und in ein entsprechendes der Vielzahl von Statorbefestigungslöchern eingeführt wird,
**dadurch gekennzeichnet,**
**dass** eine Öffnung der Rotor-Stator-Kombination an dem dem Achsschenkel zugewandten ersten axialen Ende der Rotor-Stator-Kombination, die in den hohlen Innenraum der Rotor-Stator-Kombination führt, so ausgebildet ist, dass die Rotor-Stator-Kombination als Einheit an den Achsschenkel montiert und demontiert werden kann, ohne dass das Lagersystem und/oder die Bremse vom Achsschenkel abgenommen werden muss, wobei die Statorbefestigungspunkte in einem solchen Abstand von der Motorachse angeordnet sind, dass die Statorbefestigungspunkte nicht mit dem Lagersystem und der Bremse kollidieren, wenn die Rotor-Stator-Kombination am Achsschenkel montiert oder demontiert wird.

2. Rotor-Stator-Kombination nach einem der Ansprüche 1, **dadurch gekennzeichnet, dass** die Rotorbefestigungslöcher (12) an einer axialen, der Felge (7) zugewandten Seitenfläche (16) des Rotors (1) angeordnet sind, wobei die Statorlöcher (22) nahe der axialen, der Felge zugewandten Seitenfläche des Rotors angeordnet sind, ohne das Lagersystem und die Bremse zu behindern.

3. Rotor-Stator-Kombination nach einem der Ansprüche 1 oder 2, **dadurch gekennzeichnet, dass** jedes der Rotorbefestigungslöcher (12) einen Gewindeabschnitt (14) aufweist, in den das entsprechende Verriegelungswerkzeug (3) eingeschraubt werden kann, wobei jedes der Statorbefestigungslöcher (22) ebenfalls einen Gewindeabschnitt (24) aufweist, in den das entsprechende Verriegelungswerkzeug (3) eingeschraubt werden kann.

4. Rotor-Stator-Kombination nach einem der Ansprüche 1 bis 3, **dadurch gekennzeichnet, dass** jedes der Statorbefestigungslöcher (22) einen Gewindeabschnitt (24) aufweist, in den das entsprechende Verriegelungswerkzeug (3) eingeschraubt werden kann, wobei optional jedes der Rotorbefestigungslöcher (12) einen axialen Abschnitt mit reduziertem Innendurchmesser (15) aufweist.

5. Rotor-Stator-Kombination nach einem der Ansprüche 1 bis 4, **dadurch gekennzeichnet, dass** die Rotor-Stator-Kombination ferner eine Mehrzahl von Dichtungsstopfen (8) aufweist, die in die Mehrzahl von Rotorbefestigungslöchern (12) einsetzbar sind.

6. System zur Montage und/oder Wartung eines radinternen Elektromotors, mit einer Rotor-Stator-Kombination nach einem der Ansprüche 1 bis 5 und mit einer Mehrzahl von Verriegelungswerkzeugen (3), wobei der Rotor (1) zu Montage- und/oder Wartungszwecken mit dem Stator (2) verriegelt wird, indem jedes der Mehrzahl von Verriegelungselementen in eines der Mehrzahl von Rotorbefestigungslöchern (12) und in ein entsprechendes der Mehrzahl von Statorbefestigungslöchern (22) eingesetzt wird.

7. System nach Anspruch 6 mit einer Rotor-Stator-Kombination nach Anspruch 3, **dadurch gekennzeichnet, dass** jedes Verriegelungswerkzeug (3) eine Schraube (31) mit einem Gewinde (31 1 ), dessen Größe und Typ mit der Größe und dem Typ des Gewindeabschnitts (24) der Statorbefestigungslöcher (22) übereinstimmt, und ein Rohr (32) mit Außengewinde umfasst, wobei die Größe und der Typ eines Außengewindes (321) des Rohrs mit der Größe und dem Typ des Gewindeabschnitts der Rotorbefestigungslöcher (12) übereinstimmen, wobei das Rohr an seinem einen Ende einen axialen Abschnitt mit verringertem Innendurchmesser (322) zur Begrenzung der axialen Bewegung der Schraube aufweist, und wobei das Rohr an seinem anderen Ende eine spezifische Form (324) zur Befestigung des Rohrs an dem Rotorbefestigungsloch aufweist.

8. System nach Anspruch 6 mit einer Rotor-Stator-Kombination nach Anspruch 4, **dadurch gekennzeichnet, dass** jedes Verriegelungswerkzeug (3) eine Schraube (31) mit einem Gewinde (31 1) umfasst, dessen Größe und Typ mit der Größe und dem Typ des Gewindeabschnitts (24) der Statorbefestigungslöcher (22) übereinstimmen, wobei ein Kopf (312) der Schraube im Durchmesser kleiner ist als ein Durchmesser eines axialen Abschnitts der Rotorbefestigungslöcher (12) mit nicht reduziertem Innendurchmesser (17).

9. System nach Anspruch 6, **dadurch gekennzeichnet, dass** die Durchmessergröße der Rotorlöcher (12; 18) standardisierten Presspassungsempfehlungen folgt, um einen festen Sitz mit dem Verriegelungswerkzeug (3) zu ermöglichen, wobei die Durchmessergröße der Statorlöcher (22; 28) standardisierten Presspassungsempfehlungen folgt, um einen losen Sitz mit dem Verriegelungswerkzeug zu ermöglichen.

10. System nach Anspruch 9, **dadurch gekennzeichnet, dass** das Verriegelungswerkzeug (3) ein Rohr (33) und einen Innenschaft (34) umfasst, wobei das Rohr (33) einen Außendurchmesser (331) mit einer Größe aufweist, die standardisierten Presspassungsempfehlungen folgt und einen festen Sitz mit den Rotorbefestigungslöchern (12; 18) ermöglicht, wobei das Rohr einen Innendurchmesser (332) mit einer Größe aufweist, die standardisierten Presspassungsempfehlungen folgt, die einen losen Sitz mit dem Innenschaft (34) ermöglichen, und wobei der Innenschaft einen Durchmesser (341) mit einer Größe aufweist, die standardisierten Presspassungsempfehlungen folgt, die einen losen Sitz mit den Statorlöchern (22; 28) ermöglichen.

11. Radinterne Elektromotoranordnung eines Fahrzeugs, die ein an einem Achsschenkel (4) des Fahrzeugs angebrachtes Lagersystem (10) zur drehbaren Kopplung einer Radfelge (7) mit dem Achsschenkel (4) des Fahrzeugs, eine Bremse (5) und eine Rotor-Stator-Kombination nach einem der Ansprüche 1 bis 5 umfasst,
wobei die Bremse (5) eine Bremsscheibe (51) und einen Bremssattel (52) umfasst,
wobei die radinterne Elektromotoranordnung ferner eine Dichtung oder mehrere Dichtungen (1 10) oder andere wartungsfähige Komponenten umfasst, und
wobei das Lagersystem, die Bremse, die Dichtung von mehreren Dichtungen und die anderen wartungsfähigen Komponenten nicht abnehmbar sind, während der Stator (2) über die Statorbefestigungspunkte (23) an dem Fahrzeug befestigt ist,
wobei das Lagersystem (10) optional mit einer anderen Lagersystemkonstruktion unter Verwendung eines kundenspezifischen Adapters, einer Änderung der Statorplatte (6) oder einer anderen Konstruktion der jeweiligen Fahrzeugbefestigungspunkte austauschbar ist,
wobei die Bremsscheibe (51) und der Bremssattel (52) mit einer anderen Bremsscheiben- und Bremssattelkonstruktion unter Verwendung eines kundenspezifischen Adapters, einer Änderung der Statorplatte oder einer anderen Konstruktion der jeweiligen Fahrzeugbefestigungspunkte austauschbar sind.

12. Verfahren zur Herstellung einer Rotor-Stator-Kombination nach einem der Ansprüche 1 bis 5, wobei das Verfahren die folgenden Schritte umfasst:
Anbringen eines Rotors (1) und eines Stators (2) an einer Zentrieranordnung (610),
Verriegeln der relativen Position von Rotor (1) und Stator (2) mit mindestens einem Verriegelungswerkzeug (3); und Lösen der verriegelten Rotor-Stator-Kombination von der Zentrieranordnung.

13. Das Verfahren nach Anspruch 12, wobei die Zentrieranordnung (610) radiale und axiale Zwänge für die relative Position von Rotor (1) und Stator (2) bereitstellt und eine relative Drehung von Rotor und Stator ermöglicht, und/oder
wobei ein Zwischenschritt der dynamischen Prüfung der Rotor- (1) und Stator- (2) Montage vor dem Verriegelungsschritt durchgeführt wird, und/oder
wobei das Verfahren ferner den Versand der verriegelten Rotor-Stator-Kombination umfasst, ohne ein Lagersystem (10) oder ein Bremssystem (5) an der Rotor-Stator-Kombination zu installieren.

14. Verfahren nach einem der Ansprüche 12 bis 13, wobei die Zentrieranordnung (610) für die Herstellung einer anderen Rotor-Stator-Kombination wiederverwendet wird, nachdem die verriegelte Rotor-Stator-Kombination von der Zentrieranordnung gelöst worden ist.

15. Verfahren zur Durchführung von Wartungsarbeiten an wartbaren Teilen einer radinternen Elektromotoranordnung eines Fahrzeugs nach Anspruch 11,
wobei das Verfahren die folgenden Schritte umfasst:
Entfernen eines Fahrzeugrades der radinternen Elektromotoranordnung;
Verriegeln der relativen Position eines Rotors (1) und eines Stators (2) einer Rotor-Stator-Kombination der radinternen Elektromotoranordnung mit mindestens einem Verriegelungswerkzeug (3); und
Lösen der Rotor-Stator-Kombination von Befestigungspunkten des Fahrzeugs und Bewegen der Rotor-Stator-Kombination zur Seite, ohne sie vom Fahrzeug zu trennen, wodurch die Wartung der wartbaren Komponenten ermöglicht wird,
wobei das Entfernen des Fahrzeugrads optional das Abschrauben von Felgenbolzen (71) und das Entfernen einer Felge (7) des Fahrzeugrads umfasst,
wobei der Verriegelungsschritt optional das Anbringen einer Mehrzahl von Verriegelungswerkzeugen (3) an einer Mehrzahl von Rotorbefestigungslöchern und einer Mehrzahl von Statorbefestigungslöchern umfasst, die gleichmäßig um den Umfang der Rotor-Stator-Kombination herum beabstandet sind.

## Revendications

1. Combinaison rotor-stator (9) pour un moteur-roue électrique de véhicule, l'ensemble moteur-roue électrique comprenant : un système de palier (10) monté sur une rotule du véhicule afin de coupler une jante (7) en rotation sur la rotule (4) du véhicule, un frein (5), et la combinaison rotor-stator qui comprend un rotor (1) et un stator (2), où le rotor et le stator sont disposés de façon concentrique l'un par rapport à l'autre de sorte à ce que le rotor et le stator partagent un axe moteur (13) commun, et où la combinaison rotor-stator comporte une première extrémité axiale faisant face à la rotule du véhicule lorsque l'ensemble moteur-roue électrique est entièrement assemblé, ainsi qu'une seconde extrémité axiale opposée à la rotule de véhicule lorsque l'ensemble moteur-roue électrique est entièrement assemblé, le stator (2) comprenant des points de montage de stator (23) destinés à monter la combinaison rotor-stator sur la rotule (4) du véhicule, la combinaison rotor-stator comportant un intérieur creux conçu pour recevoir le système de palier (10) et le frein (5) lorsque l'ensemble moteur-roue électrique est entièrement assemblé, et où le rotor (1) comprend une pluralité de trous de fixation de rotor (12) tout comme le stator (2) comprend une pluralité de trous de fixation de stator (22), le rotor pouvant être verrouillé sur le stator de sorte à ce que l'agencement concentrique du rotor et du stator soit maintenu sans qu'un palier soit disposé entre le rotor et le stator, le verrouillage du rotor sur le stator pouvant être obtenu en insérant une pluralité d'outils de verrouillage (3) dans la pluralité de trous de fixation de rotor et dans la pluralité de trous de fixation de stator, chacun de la pluralité d'éléments de verrouillage étant inséré dans l'un de la pluralité de trous de fixation de rotor et dans l'un correspondant de la pluralité de trous de fixation de stator, **caractérisé en ce qu'**une ouverture de la combinaison rotor-stator au niveau de la première extrémité axiale de la combinaison rotor-stator faisant face à la rotule et en avant dans l'intérieur creux de la combinaison rotor-stator est conçue de sorte à ce que la combinaison rotor-stator puisse être montée sur et démontée de la rotule du véhicule en une pièce sans avoir besoin de retirer le système de palier et/ou le frein de la rotule de véhicule, les points de montage de stator étant disposés à distance telle de l'axe du moteur que les points de montage du stator n'interagissent pas avec le système de palier et le frein lorsque la combinaison rotor-stator est montée sur ou démontée de la rotule du véhicule.

2. Combinaison rotor-stator selon la revendication 1, **caractérisée en ce que** les trous de fixation de rotor (12) sont situés sur une surface latérale axiale (16) du rotor (1) faisant face à la jante (7), dans laquelle les trous de stator (22) sont situés à proximité de la surface latérale axiale du rotor faisant face à la jante sans obstruer le système de palier et le frein.

3. Combinaison rotor-stator selon l'une des revendications 1 ou 2, **caractérisée en ce que** chacun des trous de fixation de rotor (12) comprend une partie taraudée (14) dans laquelle peut être vissé l'outil de verrouillage (3) correspondant, dans laquelle chacun des trous de fixation de stator (22) comprend également une partie taraudée (24) dans laquelle peut être vissé l'outil de verrouillage (3) correspondant.

4. Combinaison rotor-stator selon l'une des revendications 1 à 3, **caractérisée en ce que** chacun des trous de fixation de stator (22) comprend une partie taraudée (24) dans laquelle peut être vissé l'outil de verrouillage (3) correspondant, où en option chacun des trous de fixation de rotor (12) comprend une partie axiale de diamètre interne (15) réduit.

5. Combinaison rotor-stator selon l'une des revendications 1 à 4, **caractérisée en ce que** la combinaison rotor-stator comprend en outre une pluralité de bouchons d'étanchéité (8) qui peuvent être insérés dans la pluralité de trous de fixation de rotor (12).

6. Système d'assemblage et/ou d'entretien d'un moteur-roue électrique, comportant une combinaison rotor-stator conforme à l'une des revendications 1 à 5 et comportant une pluralité d'outils de verrouillage (3), où le rotor (1) est verrouillé sur le stator (2) à des fins d'assemblage et/ou d'entretien, et en ce que chacun de la pluralité d'éléments de verrouillage est inséré dans l'un de la pluralité de trous de fixation de rotor (12) et dans l'un correspondant de la pluralité de trous de fixation de stator (22).

7. Système selon la revendication 6, **caractérisé en ce que** chaque outil de verrouillage (3) comprend une vis (31) avec un filetage (311) de taille et de type correspondant à la taille et au type de la partie taraudée (24) des trous de fixation de stator (22), ainsi qu'un tube fileté à l'extérieur (32), la taille et le type du filetage externe (321) du tube correspondant à la taille et au type de la partie taraudée des trous de fixation de rotor (12), où le tube, sur sa première extrémité, comprend une partie axiale de diamètre interne réduit (322) permettant de limiter le mouvement axial de la vis, et où le tube, sur son autre extrémité, comporte une forme spécifique (324) permettant de monter le tube sur le trou de fixation de rotor.

8. Système selon la revendication 6, **caractérisé en ce que** chaque outil de verrouillage (3) comprend une vis (31) avec un filetage (311) de taille et de type correspondant à la taille et au type de la partie taraudée (24) des trous de fixation de stator (22), où la tête (312) de la vis est de diamètre plus petit que le diamètre d'une partie axiale des trous de fixation de rotor (12) de diamètre interne (17) non réduit.

9. Système selon la revendication 6, **caractérisé en ce que** la taille de diamètre des trous de rotor (12 ; 18) suit les recommandations standardisées des joints à ajustement serré de sorte à autoriser un ajustement serré avec l'outil de verrouillage (3), la taille de diamètre des trous de stator (22 ; 28) suivant les recommandations standardisées des joints à ajustement serré de sorte à autoriser un ajustement lâche avec l'outil de verrouillage.

10. Système selon la revendication 9, **caractérisé en ce que** l'outil de verrouillage (3) comprend un tube (33) et un axe interne (34), le tube (33) présentant un diamètre externe (331) de taille suivant les recommandations standardisées des joints à ajustement serré autorisant un ajustement serré avec les trous de fixation de rotor (12 ; 18), où ledit tube présente un diamètre interne (332) d'une taille suivant les recommandations standardisées des joints à ajustement serré autorisant un ajustement lâche avec l'axe interne (34), et où ledit axe interne présente un diamètre (341) d'une taille suivant les recommandations standardisées des joints à ajustement serré autorisant un ajustement lâche avec les trous de stator (22 ; 28).

11. Ensemble moteur-roue électrique d'un véhicule, comprenant un système de palier (10) monté sur une rotule (4) du véhicule afin de coupler une jante (7) en rotation à la rotule (4) du véhicule, un frein (5) et une combinaison rotor-stator conforme à l'une des revendications 1 à 5, où le frein (5) comprend un disque de frein (51) et un étrier (52), dans lequel l'ensemble moteur-roue électrique comprend en outre un joint ou de multiples joints (110) ou tous autres composants réparables, et où le système de freinage, le frein, le joint parmi de multiples joints et les autres composants réparables ne peuvent pas être retirés lorsque le stator (2) est fixé au véhicule par l'intermédiaire des points de montage de stator (23), dans lequel, en option, le système de freinage (10) est interchangeable avec une autre conception de système de freinage en utilisant un adaptateur personnalisé, un changement de la plaque de stator (6) ou une conception différente des points respectifs de fixation du véhicule, le disque de frein (51) et l'étrier (52) étant interchangeables avec une autre conception de disque de frein et d'étrier en utilisant un adaptateur personnalisé, un changement de plaque de stator ou une conception différente des points respectifs de fixation du véhicule.

12. Procédé de fabrication d'une combinaison rotor-stator conforme à l'une des revendications 1 à 5, le procédé comprenant les étapes suivantes : le montage d'un rotor (1) et d'un stator (2) sur un dispositif de centrage (610), le verrouillage de la position relative du rotor (1) et du stator (2) avec au moins un outil de verrouillage (3) ; ainsi que la séparation de la combinaison rotor-stator verrouillée du dispositif de centrage.

13. Procédé selon la revendication 12, dans lequel le dispositif de centrage (610) procure des contraintes radiale et axiale concernant la position relative du rotor (1) et du stator (2) et il autorise une rotation relative du rotor et du stator, et/ou dans lequel une étape intermédiaire de test dynamique de l'ensemble constitué du rotor (1) et du stator (2) est effectuée avant l'étape de verrouillage, et/ou le procédé comprend en outre le transport de la combinaison rotor-stator verrouillée sans installer de système de palier (10) ou de système de freinage (5) sur la combinaison rotor-stator.

14. Procédé selon l'une des revendications 12 à 13, dans lequel le dispositif de centrage (610) est réutilisé pour la fabrication d'une autre combinaison rotor-stator après que la combinaison rotor-stator a été retirée du dispositif de centrage.

15. Procédé d'exécution d'un travail de maintenance sur des composants réparables d'un ensemble moteur-roue électrique de véhicule conforme à la revendication 11, le procédé comprenant les étapes suivantes : l'extraction d'une roue de véhicule hors de l'ensemble moteur-roue électrique ; le verrouillage de la position relative d'un rotor (1) et d'un stator (2) d'une combinaison rotor-stator de l'ensemble moteur-roue électrique grâce à au moins un outil de verrouillage (3) ; et le démontage de la combinaison rotor-stator des points de montage du véhicule ainsi que le déplacement de côté de la combinaison rotor-stator sans la séparer du véhicule, ce qui autorise ainsi la maintenance des composants réparables, dans lequel l'extraction de la roue du véhicule comprend en option le dévissage des boulons de jante (71) et l'extraction d'une jante (7) de la roue du véhicule, l'étape de verrouillage comprenant en option le montage d'une pluralité d'outils de verrouillage (3) sur une pluralité de trous de fixation de rotor et une pluralité de trous de fixation de stator qui sont espacés régulièrement autour de la circonférence de la combinaison rotor-stator.
